# EUROPEAN PATENT APPLICATION

(11) **EP 4 559 793 A1**
(43) Date of publication of application: **28.05.2025**
(21) Application number: 23211211.0
(22) Date of filing: 21.11.2023
(51) Int. Cl.: B62K 25/04

(54) **SOLUTION FOR EC-SUSPENSION SYSTEM INTEGRATION IN BICYCLE**

(71) Applicant: Öhlins Racing AB, 194 27 Upplands Väsby (SE)
(72) Inventor: WALTERSSON, Erik, 194 27 Upplands Väsby (SE); ÅSLUND, Pär, 194 27 Upplands Väsby (SE)
(74) Representative: AWA Sweden AB

(57) **Abstract**

The present disclosure relates to a control arrangement (100) for controlling an electronically controlled, EC, suspension system (201) of a bicycle (200), the EC-suspension system (201) comprising front suspension (210) and rear suspension (220), the control arrangement (100) comprising: a suspension control unit, SCU (110), for controlling one or more components of the EC-suspension system (201); a first connection means (130), wherein The SCU (110) is adapted to be arranged in an insert position, in which insert position the SCU (110) is at least partially arranged in an insert space provided on the bicycle (200), in which insert position the SCU (110) is adapted to control: a front EC-valve (243) of the EC-suspension system (201), and a rear EC-valve (244) of the EC-suspension system (201), wherein the SCU (110) is adapted to control one of the front EC-valve (243) and the rear EC-valve (244) via the first connection means (130). The present disclosure also relates to a bicycle (200) incorporating the control arrangement (100), as well as a method of controlling an EC-suspension system (201) of a bicycle (200).

## Description

### Technical Field

The present disclosure generally relates to a control arrangement for controlling an electronically controlled, EC, suspension system of a bicycle. The present disclosure also relates to an EC-suspension system and a bicycle incorporating the control arrangement, as well as a method of controlling an EC-suspension system of a bicycle.

### Background

A trend today is to equip bicycles with electronically controlled, EC, suspension systems to facilitate adjusting suspension of the bicycle according to a user's needs. These EC-suspension systems may include a multitude of different subcomponents such as suspension control units, SCUs, batteries, actuators, wires, sensors etc. One restriction for EC-suspension systems is related to how much space is available on the bicycle for which the EC-suspension system is designed. With more subcomponents, the space available for each subcomponent decreases. This effectively limits which components, and how many, can be incorporated into an EC-suspension system.

A further problem with EC-suspension systems is how to connect all subcomponents with one another. Generally, there are two options: wired connection and wireless connection. Wired connection further limits the space available for subcomponents and makes installation and maintenance of the EC-suspension system more cumbersome. Moreover, cable connectors are typically bulky and susceptible to wear and tear from impact during bicycle operation. While wireless connection removes the need for cables and cable connectors, it instead introduces the need for a wireless transceiver/transmitter unit to be built into every subcomponent, thereby increasing the size of the subcomponent. Moreover, the wireless transceiver/transmitter units may also be susceptible to wear and tear from impact during bicycle operation. Moreover, each wireless transceiver/transmitter unit needs to be powered by a respective battery which may be difficult to fit appropriately on the bicycle. Hence, EC-suspension systems typically incorporate a mix between wired and wireless connection, the choice of which depending on a plurality of design factors.

In view of the above, there is a need to provide a solution which alleviates at least some of the identified problems above.

### Summary

It is an object of the present disclosure to provide a control arrangement for an EC-suspension system of a bicycle, which control arrangement alleviates at least some problems of the prior art. A first object of the disclosure is to provide a control arrangement for an EC-suspension system of a bicycle, which control arrangement integrates a plurality of subcomponents of an EC-suspension system to one unit. The first object is solved by the invention according to claim 1. A second object of the disclosure is to provide a control arrangement for controlling an EC-suspension system of a bicycle, which control arrangement is more durable than prior art solutions. The second object is solved by the invention according to claim 1. A third object of the disclosure is to provide a control arrangement for controlling an EC-suspension system of a bicycle, which control arrangement is more user friendly than prior art solutions. The third object is solved by the invention according to claim 1. Additional advantages of the invention according to a first aspect or any other aspect or any embodiments thereof are summarized in the following.

The disclosure is based on a combination of inventor realizations summarized in the following.

A first inventor realization is that a plurality of subcomponents of a bicycle EC-suspension system can be integrated in a single unit in the form of a Suspension Control Unit, SCU, thereby reducing the number of different subcomponents and facilitating control thereof. Such a SCU can be made in a compact form factor and thereby easily be attached to a bicycle to control an EC-suspension system of a bicycle.

A second inventor realization is that this SCU can be further adapted to be arranged to control a first EC-valve of a front suspension and a rear suspension and a second EC-valve of the front suspension and the rear suspension by means of a first connecting means. As such, control of front suspension and rear suspension is facilitated since both are controllable by the same SCU.

A third inventor realization is that the SCU can be adapted in a compact form factor to enable it to be at least partially inserted in an insert space defined by the bicycle, in particular a bicycle front fork or bicycle frame, or defined by a component of the front suspension and/or the rear suspension. By adapting the SCU so that it can be at least partially inserted in such an insert space, the SCU is more protected during use which makes such a SCU more durable. Moreover, this also makes more efficient use of the limited space available of a bicycle. In the case when the SCU is arranged at least partially in a bicycle front fork, the SCU is arranged in an appropriate position to be able to control a front EC-valve of a front suspension on a bicycle. The SCU may control a rear EC-valve of a rear suspension of a bicycle by means of a first connection means. Alternatively, the SCU may be arranged at least partially in an insert space defined by a cylinder head of a rear shock absorber or in an insert space defined by a body attached thereto. In this case, the SCU may control a front EC-valve of a front suspension of a bicycle by means of a first connection means. Thereby, irrespective of front position and rear position of the SCU, both front suspension and rear suspension can be controlled from a single SCU.

By controlling front suspension and rear suspension with a SCU as described above, the need for wires, connectors, and multiple batteries is reduced, thereby making even more efficient use of the limited space available on a bicycle. In addition, the SCU may be adapted with a plurality of functionalities, and allow a user to control the EC-suspension system via a single SCU. Thereby, such a SCU facilitates interaction and control of the EC-suspension system, thereby providing a more user friendly control of EC-suspension system.

According to a first aspect of the invention, a control arrangement is provided for controlling an electronically controlled, EC, suspension system of a bicycle, the EC-suspension system comprising a front suspension and a rear suspension. The control arrangement comprises: a suspension control unit, SCU, for controlling one or more components of the EC-suspension system. The control arrangement comprises: a first connection means. The SCU is adapted to be arranged in an insert position in a front fork of the bicycle, in which insert position the SCU is at least partially arranged in an insert space of the front fork, in which insert position the SCU is adapted to control: a front EC-valve of the EC-suspension system for controlling the front suspension, and a rear EC-valve of the EC-suspension system for controlling the rear suspension, wherein the SCU is adapted to control the rear EC-valve via the first connection means.

The control arrangement, at least including the SCU and the first connection means, enables a front EC-valve of a front suspension of a bicycle and a rear EC-valve of a rear suspension of a bicycle to be controlled with a single unit, the SCU. This advantageously integrates a plurality of EC-suspension system subcomponents into a single SCU. As such, the invention solves the first objective of the disclosure. The SCU may be adapted to control the EC-suspension system or enable control thereof. The SCU may be adapted to receive control signals from an additional computer device, such as a portable computer device, and control the EC-suspension system in response to the received control signals. Moreover, since the SCU is adapted to be at least partially arranged in a front fork of the bicycle, the control arrangement as a whole is better protected during use, thereby increasing the durability of the SCU. As such, the invention solves the second object of the disclosure. Also, since the SCU is adapted to control both front suspension and rear suspension of a bicycle, a user does not have to adjust these separately. As such, the control arrangement provides a more user friendly solution, thereby solving the third objective of the disclosure.

According to one alternative embodiment, the control arrangement comprises: a suspension control unit, SCU, for controlling one or more components of the EC-suspension system; a first connection means. The SCU is adapted to be arranged in an insert position, in which insert position the SCU is at least partially arranged in an insert space provided on the bicycle, in which insert position the SCU is adapted to control: a front EC-valve of the EC-suspension system, and a rear EC-valve of the EC-suspension system, wherein the SCU is adapted to control one of the front EC-valve and the rear EC-valve via the first connection means. The SCU may be adapted to be at least partially arranged in an insert space of a cylinder head of a rear shock absorber, and the SCU is adapted to control the front EC-valve via the first connection means.

According to one embodiment, the control arrangement comprises: a support member for attaching the SCU to the bicycle, wherein the control arrangement is further adapted to enable the SCU, when the SCU is in the insert position, to rotate relative the support member to a target position.

This advantageously enables the SCU to be rotated in the insert position, and thus removes the prerequisite that the SCU must be oriented in a particular orientation before being mounted in place. The SCU can be rotated relative the support member after these have been assembled in place. In addition, firstly, this is advantageous if the first connection means comprises a wire, and you want to orient the wire in a preferred direction so as to fasten it in a tight position with the bicycle, in particular with front fork and/or frame. This reduces the amount of loose wires, which is advantageous during use as it reduces the risk of the wire being pulled out of place or torn apart if something gets stuck in it. Secondly, the SCU may comprise one or more accelerometers, or an Inertial Measurement Unit, IMU, comprising one or more accelerometers, and the SCU may thus allow the one or more accelerometers to be oriented in a preferred orientation, thereby improving the SCU's ability to provide accurate accelerometer measurements, on which other EC-suspension system sensor measurements and/or parameter adjustments may depend. Thereby, by orienting the SCU accordingly, efficiency of the EC-suspension system may be improved.

The support member may be adapted in size and shape to attach to an inner wall of an insert space. The support member may be adapted with attachment means to enable the support member to attach the support member to the bicycle front fork. The attachment means may include threads for engaging with an inner wall of an insert space, which inner wall may be provided with a cooperating set of threads. The attachment means may include a protrusion or recess for engaging with a cooperating element in an insert space to rotationally lock the support member with e.g., the bicycle front fork. The attachment means may include an edge portion adapted to engage with a boundary of the opening into an insert space. The support member may be adapted with a receiving means for receiving the SCU therein, or a SCU housing adapted to house a SCU circuit board. The receiving means may be adapted to allow the SCU to rotate relative the support member. The receiving means may include a recess or a through-hole. The receiving means may define a rotational axis. The support member may be adapted so that the rotational axis and an insert axis are substantially parallel.

By SCU, it may be meant a control unit for controlling suspension. It may include the electronics, for instance provided as a SCU circuit board, any other electronic components, actuators, wires, interactive means, an IMU, means for wired communication or wireless communication etc. It may also include a housing, a SCU housing, for housing one or more of components of the SCU. Thus, by the SCU being adapted, it may mean the SCU is adapted in terms of functionality or in terms of shape. The latter may mean that the SCU housing is adapted in size and shape for a particular purpose or with a particular design.

According to one embodiment, the control arrangement comprises: position indicator means to indicate a current position of the SCU relative the front fork. This advantageously allows a user to verify orientation of the SCU relative the front fork, which then allows the user to orient the SCU in a preferred orientation. The position indicator means may include a first visual element such as a mark, a pattern, a notch or the like arranged on the SCU. The control arrangement may comprise an auxiliary member to be arranged on the bicycle front fork, which auxiliary member is adapted with a second visual element. The control arrangement may be adapted so that the preferred orientation is achieved by aligning the first visual element and the second visual element. Alternatively, the second visual element may be provided on the bicycle front fork directly. Alternatively, the control arrangement may be adapted so that the position indicator means is intended to be oriented in a particular direction relative a bicycle forward movement direction. For instance, the position indicator means may be intended to be oriented in a bicycle forward movement direction.

According to one embodiment, the SCU comprises: an accelerometer or an Inertial Measurement Unit, IMU, including an accelerometer, wherein the target position of the SCU is based on a target orientation of the accelerometer. The SCU may comprise one or more accelerometer. The SCU may comprise an IMU including one or more accelerometers. By this, the SCU may measure accelerations in one or more directions, from which a position or movement may be determined. The SCU may control the front EC-valve and/or the rear EC-valve to achieve certain damping characteristics based acceleration measurements and/or additional sensor measurements provided by the IMU. The IMU may comprise one or more sensors, such as a accelerometer, for triaxial acceleration. The IMU may comprise one or more sensors, such as a gyroscope, for triaxial angular velocity.

One or more of the accelerometers may be adapted to measure proper acceleration. By proper acceleration, it may be meant the acceleration of a body in its own instantaneous rest frame. For instance, an accelerometer at rest on the surface of the Earth will measure an acceleration due to Earth's gravity, straight upwards. In contrast, an accelerometer in free fall will measure zero.

One or more of the accelerometers may be single-axis accelerometer. One or more of the accelerometers may be multi-axis accelerometers. One or more accelerometers may be adapted to measure both magnitude and direction of (proper) acceleration, for instance as a vector quantity. The one or more of the accelerometers may be adapted to sense orientation, coordinate acceleration, vibration, shock, and falling in a resistive medium. One or more accelerometers may be micromachined microelectromechanical, MEMS, accelerometers.

According to one embodiment, the control arrangement comprises: securing means for locking the SCU in a position relative the support member. By this, the SCU may advantageously be maintained in a preferred position during use. The control arrangement is not limited to any particular type of securing means, but can be adapted with any securing means. Securing means may for instance include a snap-lock, a clamping member, a pin member adapted to engage with holes in the support member and the SCU, etc.

According to one embodiment, said securing means includes a clamping member. By this, the SCU may advantageously be maintained in a preferred position during use by a simple element which is easy to lock and unlock. The clamping member may be adapted to clamp the SCU or a SCU housing in position to prevent rotational movement thereof. The clamping member may be adapted to extend at least partially in a circumferential direction of the SCU. The circumferential direction may be defined as a circumferential direction relative a rotational axis. The clamping member may be adapted to be locked and unlocked by operation of a fastening member or the like. The clamping member may be adapted with two portions, wherein said two portions are adapted to engage with one another via a hinge. The two portions may be adapted to fold around the SCU or a SCU housing thereof in a clamping position. The two portions may be adapted to lock into one another by means of a fastening element.

According to one embodiment, the control arrangement comprises: a SCU positioning actuator adapted to control the position of the SCU relative the support member in response to a control signal, wherein the SCU is adapted to generate said control signal. By this, the control arrangement may allow for the SCU to orient itself on command.

According to one embodiment, the SCU is adapted to be inserted in an insert space located in a first fork leg of the front fork or a steering tube of the front fork. By arranging the SCU in a front fork leg, it may facilitate control of a front EC-valve which conventionally is also arranged in a front fork leg. By arranging the SCU in a steering tube, it may allow for a larger front EC-valve. When arranged in the steering tube, the SCU may be adapted to control the front EC-valve via wired communication or wireless communication. Wired communication may include one or more wires which are connected to the front EC-valve, said one or more wires adapted to be arranged either wholly internally in the front fork or arranged only partially internally in the front fork, with one or more wire segments being adapted to be arranged externally to the front fork.

According to one embodiment, the SCU is adapted to connect with at least one additional component of the EC-suspension system, which said at least one additional component includes one or more of: i) a power source, ii) one or more sensors; iii) one or more actuators, iv) a Human Machine Interface, HMI, v) a portable computer device. Power source may include battery and/or electric generator. The SCU may be adapted to connect with said power source with wired connection. One or more sensors may for example include sensors for sensing a state of an actuator, an operation or the like. The SCU may be adapted to connect with said one or more sensors with wired connection, or with wireless communication. The one or more sensors may be powered by means of said power source. One or more actuators may for example include actuators of the front EC-valve, the rear EC-valve, other actuators for adjusting a position or state of a component of the EC-suspension system or an element of the bicycle. HMI may for instance be a device on the bicycle or a device attachable to the bicycle, which HMI allows a user to control the EC-suspension system in one or more aspects. A portable computer device may for instance include a smart device, such as a smartphone, a smartwatch, or the like. The portable computer device may be adapted to connect with the SCU, either with wired connection and/or wireless connection. The portable computer device may be adapted to function as an HMI.

According to one embodiment, the first connection means is adapted to connect with the rear EC-valve and at least one of the at least one additional component of the EC-suspension system. Thus, generally stated, the first connection means is adapted to connect with a first component and a second component. The first connection means may be adapted so that the SCU connects directly or indirectly with the first component and/or the second component. By connects indirectly, it may be meant that the SCU connects with one of the first component and the second component via the other of the first component and the second component. As an example, the first connection means may be adapted to connect the SCU to a power source, and adapted to connect the SCU to the rear EC-valve via the power source. The first connection means may comprise a single wire, or a plurality of wires connected between any two or more of the SCU and the additional components.

According to one embodiment, the control arrangement comprises: wireless communication means for establishing wireless communication between the SCU and at least one of said at least one additional component of the EC-suspension system. By this, the amount of wires may be reduced. For instance, the SCU may be adapted to communicate wirelessly with a portable computer device, for instance a control unit, a smart device (such as a smartphone or smartwatch). The SCU may be adapted to receive data or output data via wireless communication. Data which can be received and/or outputted may for instance include: i) control data (e.g., control signal or instructions on how the SCU is to control front suspension and/or rear suspension), ii) sensor data, iii) request data (e.g., the SCU requests control instructions from the portable computer device, or the SCU requests sensor measurements from one or more sensors etc.), iv) confirmation data (e.g., the SCU confirms receiving control instructions), etc. The wireless communication means may be adapted to communicate via Bluetooth, IR, Wi-Fi, or the like.

According to one embodiment, the first connection means includes a wired connection. The wired connection may include one wire cable or a plurality of wire cables for establishing connection between the SCU and one additional component of the EC-suspension system. For instance, the first connection means may establish wired connection between the SCU and a power source, such as a battery. For instance, the first connection means may establish wired connection between the SCU and the rear EC-valve, either directly or via a power source, such as a battery. For instance, the first connection means may establish wired connection between the SCU and one or more sensors. For instance, the first connection means may establish wired connection with a portable computer device, such as a smart device. The wired connection may be attached to the bicycle front fork and/or the bicycle frame as needed. The wired connection may be arranged at least partially or wholly inside the bicycle front fork and/or the bicycle frame.

According to one embodiment, the control arrangement comprises: a power source, such as a battery, for providing power to the SCU and optionally to one or more components of the EC-suspension system. The power source may be adapted with power capacity to power the SCU and the EC-suspension system. The SCU may be adapted to be a part of the EC-suspension system. The power source may be adapted with power capacity to power the SCU and the rest of the EC-suspension system. As a way to conserve power, one or more actuators of the EC-suspension system may be adapted to maintain an actuator setting in a non-energized state. The SCU may be adapted with a standby power state and an active power state. The SCU may be adapted to control one or more components of the EC-suspension system in the active power state. The SCU may be adapted to await input in the standby power state from one or more components of the EC-suspension system. The SCU may comprise one or more sensors to sense when such input is received and change state from standby power state to active power state. The SCU may be adapted to change state from active power state to standby power state following a period of inactivity. The standby power state may be characterized by a lower power draw than the active power state. One or more or each of the components of the EC-suspension system may be adapted with a standby power state / active power state functionality.

According to one embodiment, the power source is adapted to provide power to all EC-valves and/or all actuators and/or all sensors associated with the front suspension and/or the rear suspension of the bicycle. By this, the EC- system is powered from a single power source, thereby simplifying maintenance of power source and charging thereof.

According to one embodiment of the invention, said power source is a battery and is adapted to be inserted in one of: i) said insert space of the front fork; ii) a second insert space of the front fork; iii) a third insert space in a bicycle frame of the bicycle. The battery may be adapted to be inserted in the same insert space as the SCU or a different insert space as the SCU. By adapting them in different insert spaces, the battery may be designed with a larger power capacity, thereby reducing the frequency of required charging. Moreover, the SCU may be adapted with additional functionalities which is otherwise difficult to achieve due to space limitations.

According to one embodiment, the control arrangement comprises: a second connection means provided on a housing of the SCU, wherein the battery is rechargeable via said second connection means. The SCU may be adapted to connect with a charging cable via the second connection means. The second connection means may include a charging port. The control arrangement may comprise a releasable cover to cover and expose the charging port as needed. The releasable cover may be at least partially attached to the housing of the SCU so as to prevent misplacement of the releasable cover. The releasable cover may alternatively be fully removable from the housing of the SCU.

According to one embodiment, the SCU is adapted to receive and/or output data via the second connection means. The SCU may be adapted to connect with a computer device which may be a stationary computer device or a portable computer device. By this, the SCU may advantageously receive firmware updates or may receive other data. By this, the SCU may advantageously output any desired data.

According to one embodiment, the SCU is adapted to, when in the insert position, to close the insert space of the front fork, wherein a housing of the SCU is adapted at least partially with a wireless communication permissible material to allow the SCU to communicate wirelessly with one or more components of the EC-suspension system outside the insert space into which the SCU is adapted to be arranged. The SCU may be adapted with a housing to close the insert space of the front fork. The housing may comprise one or more housing portions. One housing portion may be a lid member. The first connection means and/or the second connection means may be provided on the housing of the SCU, optionally on the lid member. The lid member may be releasably attached to a housing body, which housing body is adapted to house a SCU circuit board.

According to one embodiment, the control arrangement comprises: user interactive means, such as a button, for controlling at least one operation of the SCU. The user interactive means may be provided on a housing of the SCU. The user interactive means may be arranged to be accessible when the SCU is inserted into an insert position. The user interactive means may include one or more buttons, a touch screen, or the like. The at least one operation of the SCU may be turn ON/OFF, change state between standby power state and active power state, activate/deactivate connection with an external computer device, such as a portable computer device.

According to one embodiment, the control arrangement comprises: status indicating means, such as a LED-device, for indicating a status of the SCU and/or the EC-suspension system. The status indicating means may include a LED-device comprising one or more LED-elements which can be individually controlled to emit light, optionally light in a particular color. The one or more LED-elements may be controlled to generate a pattern corresponding to a status to be indicated. The pattern may include a time invariant portion (for instance, two of three LED-elements emit light) and/or a time variant portion (for instance, one LED-element emits light for one second and then does not emit light for two seconds). The LED-device may be adapted to indicate status of the SCU and/or the EC-suspension system in a pattern which includes a time invariant portion and/or a time variant portion. The status indicating means may include a display having a particular resolution. Said display may be a touch screen. The SCU may be adapted to generate a message to be shown on said display which message indicates the status to be indicated.

According to one embodiment, the control arrangement comprises an actuator for adjusting a valve member of the front EC-valve or the rear EC-valve. The actuator and the SCU may be integrated. The SCU may be adapted to operate the actuator. The SCU may by operation of the actuator adjust the front EC-valve or the rear EC-valve. The SCU may be arranged in an insert space so that the actuator is coupled to said valve member, or allows the actuator to couple to said valve member. When arranged in an insert space of the front fork, the SCU may be arranged such that the actuator and the valve member of the front EC valve are coupled or can be coupled. When arrange din an insert space of a cylinder head of a rear shock absorber or a body attached thereto, the SCU may be arranged such that the actuator and the valve member of the rear EC valve are coupled or can be coupled. In one embodiment, the control arrangement comprises the front EC-valve. In one embodiment, the control arrangement comprises the rear EC-valve. The control arrangement may be adapted so that the SCU and the actuator, or the SCU and one of the front EC-valve and the rear EC-valve, are provided as an assembled unit. This may facilitate mounting of the SCU to a bicycle.

According to a second aspect of the invention, an electronically controlled, EC, suspension system for a bicycle is provided. The EC-suspension system comprises: a front suspension; a front EC-valve adapted to control the front suspension of the bicycle; a rear suspension; a rear EC-valve adapted to control the rear suspension of the bicycle; a control arrangement according to the first aspect or any embodiments thereof.

According to a third aspect of the invention, a bicycle is provided. The bicycle comprises: an EC-suspension system including: a front suspension, a front EC-valve adapted to control the front suspension, a rear suspension, a rear EC-valve adapted to control the rear suspension; one or more insert spaces in a front fork of the bicycle, and optionally one or more insert spaces in a bicycle frame of the bicycle, and a control arrangement according to the first aspect or any embodiments thereof.

According to a fourth aspect of the invention, a method for controlling operation of an EC-suspension system of a bicycle is provided. The method comprises the steps of: i. determining a parameter of the EC-suspension system to be adjusted; ii. adjusting said parameter of the EC-suspension system by means of a control arrangement according to the first aspect or any embodiments thereof; iii. optionally, adjusting a position of the SCU relative a support member to a target position; iv. optionally, communicating with at least one of one or more additional components of the EC-suspension system, wherein said step of adjusting said parameter is at least partly based on input from said at least one of one or more additional components of the EC-suspension system.

According to a fifth aspect, a computer program is provided. The computer program comprises instructions which, when the program is executed by a computer, cause the computer to carry out the method according to the fourth aspect or any embodiments thereof.

According to a sixth aspect, computer-readable storage medium is provided. The computer-readable storage medium comprises instructions which, when executed by a computer, cause the computer to carry out the method according to the fourth aspect or any embodiments thereof.

Effects and features of the second aspect, third aspect, fourth aspect, fifth aspect, sixth aspect are largely analogous to those described above in connection with the first aspect. Embodiments mentioned in relation to the first aspect are largely compatible with the second aspect, third aspect, fourth aspect, fifth aspect, sixth aspect. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief Description of the Drawings

The disclosure will in the following be described in more detail with reference to the enclosed drawings, wherein:
Fig. 1 shows a side view of a bicycle with an EC-suspension system and a control arrangement according to one embodiment of the invention;
Fig. 2 shows a perspective view of a portion of a bicycle front fork and a control arrangement according to one embodiment of the invention;
Fig. 3 shows a top view of a portion of a bicycle front fork and a control arrangement according to one embodiment of the invention;
Fig. 4 shows a perspective view of a control arrangement according to one embodiment of the invention when arranged in an insert space of a bicycle front fork;
Fig. 5 shows a cross sectional view of a control arrangement according to one embodiment of the invention when arranged in an insert space of a bicycle front fork;
Fig. 6 shows a perspective view of a power source according to one embodiment of the invention;
Fig. 7 shows a cross-sectional view of a power source according to one embodiment of the invention;
Fig. 8 shows a perspective view of a control arrangement according to one embodiment of the invention;
Fig. 9 shows a side view of a control arrangement according to one embodiment of the invention;
Fig. 10 shows a top view of a control arrangement according to one embodiment of the invention;
Fig. 11 shows a cross sectional view of a control arrangement according to one embodiment of the invention;
Fig. 12 shows a side view of a bicycle with an EC-suspension system and a control arrangement according to one embodiment of the invention;

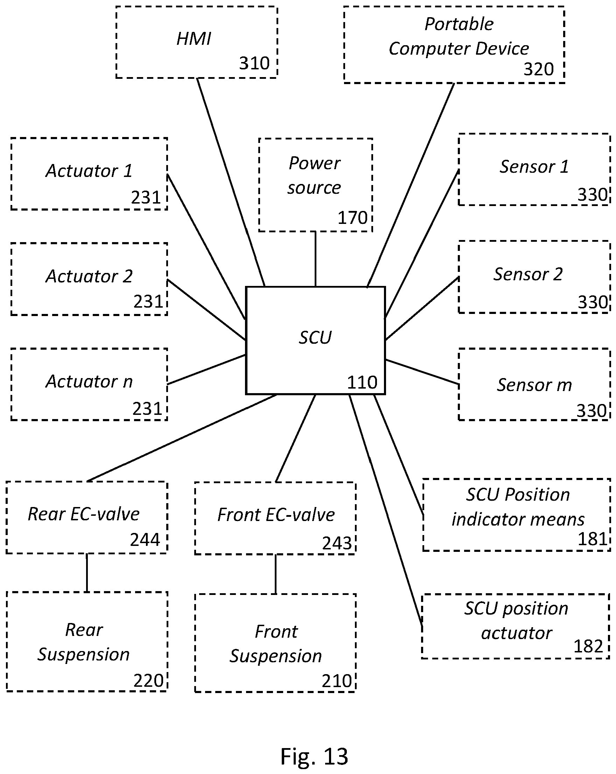

Fig. 13 shows a schematic illustration of a control arrangement and a EC-suspension system according to one embodiment of the invention;
Fig. 14 shows a schematic illustration of a SCU of the control arrangement according to one embodiment of the invention;
Fig. 15 shows a schematic illustration of a method of controlling an EC-suspension system according to one embodiment of the invention.

### Description of Embodiments

The disclosure will now be described with reference to the attached figures. Features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

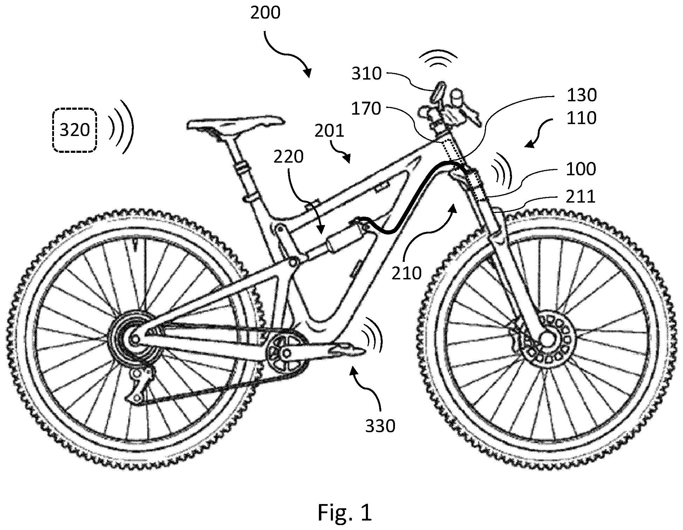

Fig. 1 shows a side view of a bicycle 200 adapted with an EC-suspension system 201. The EC-suspension system 201 comprises front suspension 210 and rear suspension 220. A control arrangement 100 for controlling the EC-suspension system 201 is also shown.

The control arrangement 100 comprises: a suspension control unit, SCU, 110, for controlling one or more components of the EC-suspension system 201. The control arrangement 100 comprises a first connection means 130. In Fig. 1, the SCU 110 is exemplified as being adapted to be arranged in an insert position in a front fork 211 of the bicycle 200, in which insert position the SCU 110 is at least partially arranged in an insert space of the front fork, in which insert position the SCU 110 is adapted to control: a front EC-valve of the EC-suspension system 201 for controlling the front suspension 210, and a rear EC-valve of the EC-suspension system 201 for controlling the rear suspension 220, wherein the SCU 110 is adapted to control the rear EC-valve via the first connection means 130. In Fig. 1, the first connection means 130 is exemplified as including a wire extending from the bicycle front fork 211 to the rear suspension 220. In Fig. 1, the front suspension 210 is exemplified as including a front suspension fork. In Fig. 1, the rear suspension 220 is exemplified as including a rear shock absorber. The first connection means 130 is adapted to connect with a rear EC-valve of the rear shock absorber. Moreover, in Fig. 1, the SCU 110 is exemplified to be adapted to communicate wirelessly with a computer device 310 arranged on the bicycle handlebars. The SCU 110 may be adapted to communicate wirelessly with a remote computer device 320 or one or more sensors 330. As an example, the bicycle 200 may be adapted with a pedal sensor 330 which can relay pedal information to the SCU. The bicycle 200 may be adapted with one or more sensors as necessary, and the SCU may be adapted to communicate with said sensors, with wireless and/or wired connection, and control front suspension 210 and/or rear suspension 220 based on sensor information from said sensors. The control arrangement 100 may further be adapted to connect with a power source 170, such as a battery. The battery may be adapted to be arranged in a steering tube. The control arrangement 100 may comprise said power source 170.

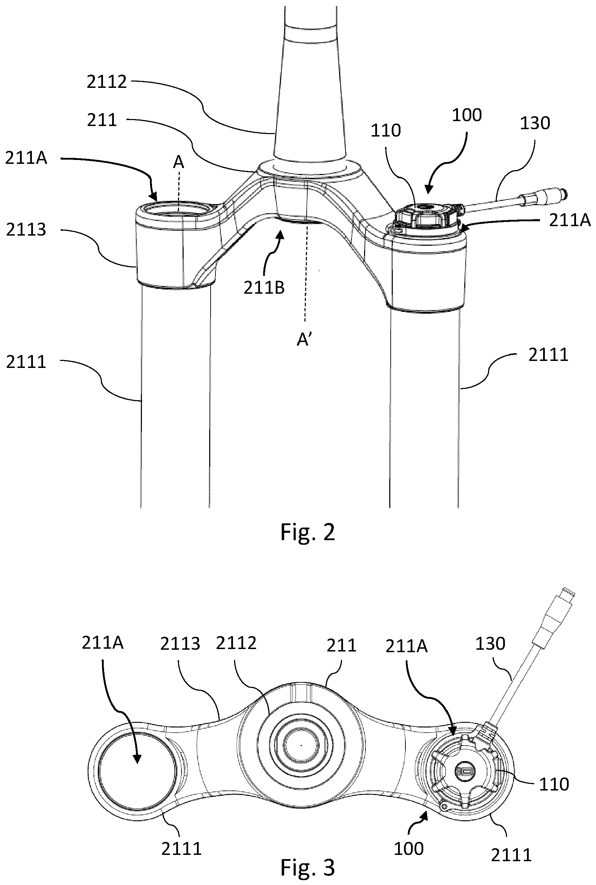

Fig. 2 shows a bicycle front fork 211. The bicycle front fork 211 comprises a first fork leg 2111 and a second fork leg 2111. The bicycle front fork 211 comprises a steering tube 2112. The bicycle front fork 211 comprises a connecting member 2113 into which the two fork legs 2111 and the steering tube 2112 are inserted. The fork legs 2111 are adapted with a generally cylindrical shape. At least one of, or both, fork legs 2111 define an insert space 211A extending along an insert axis A. The steering tube 2112 is adapted with a generally cylindrical shape. The steering tube define an insert space 211B extending along an insert axis A'.

In Fig. 2. the control arrangement 100 is adapted in size and shape so that the SCU 110 can be at least partially inserted in the insert space 211A in one of the fork legs 2111. The control arrangement 100 may however be adapted so that the SCU 110 can be arranged at least partially inserted in the insert space 211B in the steering tube 2112, or in any other insert space of the bicycle 200. When arranged in an insert position, the SCU 110 is adapted for controlling a front EC-valve of a front suspension 210 of the bicycle 200 and for controlling a rear EC-valve of a rear suspension 220 of the bicycle 200. The SCU 110 is adapted for controlling the rear EC-valve via the first connection means 130, which in Fig. 2 is exemplified as a wire adapted to be connected at least indirectly with said rear EC-valve. The first connection means may be adapted to connect with a battery arranged in the insert space 211B, and connect with the rear EC-valve via a wire extending between the battery and the rear EC-valve. Fig. 3 shows a top view of the bicycle front fork 211 and a control arrangement 100 with the SCU 110 arranged in an insert position, in which position the SCU 110 is at least partially arranged in the insert space 211A of one of the fork legs 2111.

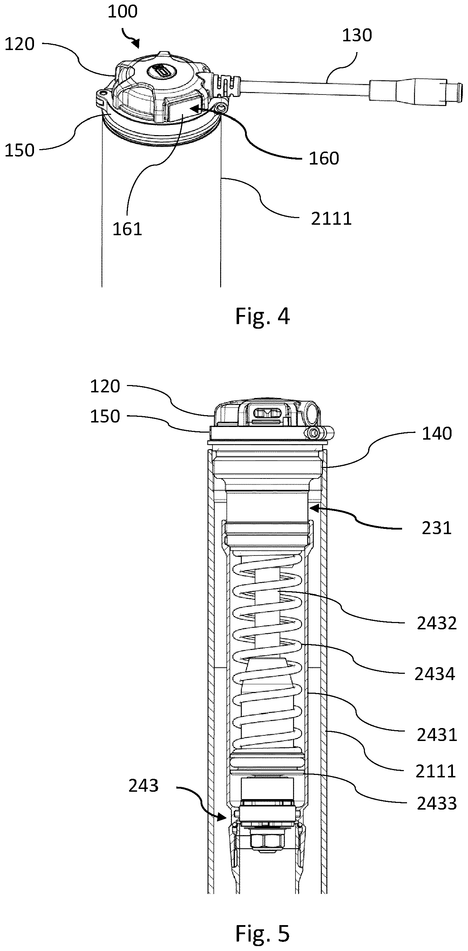

In Fig. 4, the control arrangement 100 is arranged so that the SCU 110 is at least partly inserted in a fork leg 2111 in an insert position. The control arrangement 100 further comprises securing means 150 for locking the SCU 110 in a position relative the fork leg 2111. In the embodiment exemplified in Fig. 4, the securing means 150 includes a clamping member. The clamping member 150 comprises a first portion and a second portion connected to one another with a hinge portion. The hinge portion allows the first portion and the second portion to pivot relative one another. In a locking position, the clamping member 150 extends around the SCU 110 so that ends of the first portion and the second portion of the clamping member can connect to another in a locked state. In the embodiment exemplified in Fig. 4, each of the first clamping portion and the second clamping portion comprises a receiving end with a through-hole for receiving a fastening element such as a pin element or a screw or the like. The fastening element may be arranged to extend through the respective through-holes of the first clamping portion and the second clamping portion when these through-holes are substantially aligned. By operating the fastening means, the clamping member may be tightened into a secured position, thereby enabling the SCU to be locked in an insert position.

The control arrangement 100 comprises a first connection means 130. In Fig. 4, the first connection means is exemplified as including a wire. The control arrangement 100 may comprise a second connection means 160 for enabling the SCU to connect with a charging cable to charge the SCU or a power source from which the SCU receives power. The second connection means 160 may be provided on the SCU 110. The second connection means 160 may be adapted to allow data transfer to and from the SCU 110. In Fig. 4, the second connection means 160 is exemplified as including a port. The port may be adapted to connect to a charging cable and/or a data transfer cable. The control arrangement 100 may comprise protection means 161 for protecting the second connection means 160 when not in use. In Fig. 4, the protection means 161 is exemplified as including a releasable cover 161. The releasable cover 161 may be adapted to be releasably attached to the SCU 110 to cover the port 160. The protection means 161 may be adapted to seal the second connection means 160 to dust and/or liquid.

In Fig. 5, a cross sectional side view of the control arrangement 100 when arranged to a bicycle front fork such that the SCU 110 is inserted into an insert space of the bicycle front leg 3301 in an insert position. The control arrangement 100 comprises a SCU 110 and a first connection means. The control arrangement 100 comprises a support member 140. In Fig. 5, the support member 140 is exemplified as including a substantially cylindrical body adapted in size and shape to cooperate with an insert space wall of the insert space of the fork leg 3301. The support member 140 is exemplified as being adapted with threads for engaging with the fork leg 3301. The SCU 110 is moreover adapted with an actuator 231 which, in response to a control signal from the SCU 110, can upon actuation move a valve member 2433 of an EC-valve 243 in the same insert space. The EC-valve 243 may comprise a valve which can be changed between a first state and a second state to regulate fluid flow, wherein the valve is adapted to be change between first state and the second state under influence of an actuator. In the embodiment shown in Fig. 5, the actuator of the EC-valve 243 and the actuator of the SCU may be shared, as in, it may be the SCU 110 may provide the actuator by which the EC-valve 243 may be actuated.

The actuator 231 may comprise an electrical motor or the like for generating a mechanical movement in response to an electrical signal. The actuator 231 may when actuated cause a valve member 2433 of the EC-valve 243 to move to regulate fluid flow. The valve member 2433 may be arranged at a distance from the actuator 231. The valve member 2433 may be coupled to the actuator 231 by means of a connecting member 2432. The connecting member 2432 may for example be a rod element 2432. In the insert space, two or more fluid spaces may be defined, and at least partially separated from one another by means of one or more components. As shown in Fig. 5, an inner cylinder may be provided to separate the insert space into an inner fluid space and an outer fluid space. The valve member may be adapted to move in the inner fluid space. Moreover, a resilient member may be provided to return the valve member to a starting position.

The actuator 231 may include one or more gears to convert a rotational movement of an electrical motor or the like to a linear motion of the valve member 2433. Alternatively, or in combination, the 231 may include a solenoid device for directly generating by means of electromagnetism a linear movement of a connecting member to which the valve member 2433 is connected.

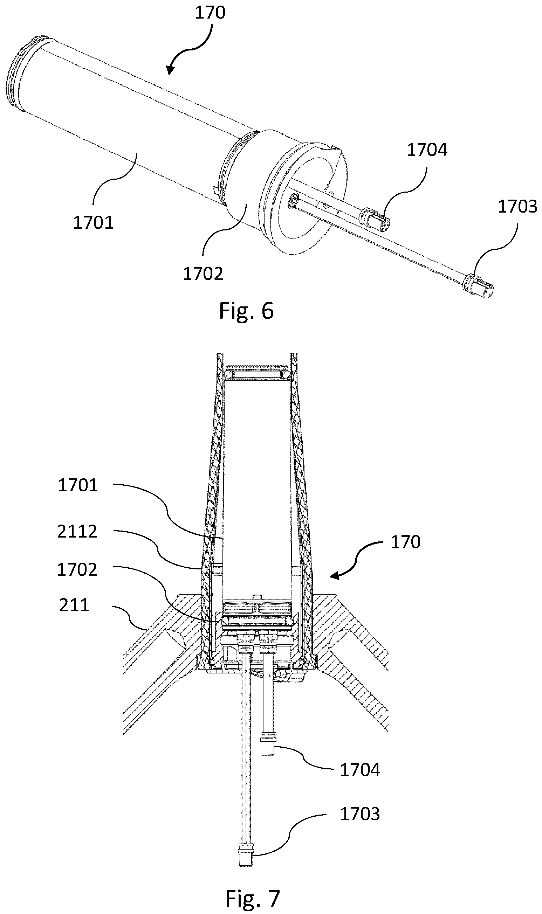

The control arrangement 100 may include a power source 170 such as a battery. In Fig. 6, a battery 170 is illustrated. The battery is included in a battery arrangement 170. The battery arrangement 170 may include a housing, which housing may include a housing body 1701 and a housing cap 1702 adapted to engage with the housing body 1701 to house a battery in a secure manner inside. The battery arrangement 170 is adapted in size and shape to be inserted into an insert space of a bicycle, such as an insert space in a bicycle front fork 310. In Fig. 6, the battery arrangement 170 is exemplified as comprising a third connection means 1703 and a fourth connection means 1704. One of the third connection means 1703 and the fourth connection means 1704 may connect with the first connection means 130 to at least supply power to the SCU 110. One other of the third connection means 1703 and the fourth connection means 1704 may connect with a component of the EC-suspension system to supply power to said component. In one preferred embodiment, the third connection means 1703 and the fourth connection means 1704 are adapted for transferring control signals along with power supplying capabilities. By this, the SCU 110 may control said component via the first connection means 130, the third connection means 1703 and the fourth connection means 1704. Said component may preferably be a rear EC-valve. The third connection means 1703 and/or the fourth connection means 1704 may form portions of the first connection means 130. In Fig. 7, the battery arrangement 170 is shown when arranged in an insert space of a steering tube 3302 in a bicycle front fork 310. The battery arrangement 170 may however be arranged elsewhere, such as in an insert space in one of the bicycle front fork legs or in an insert space in a bicycle frame. As a further option, the battery arrangement may be attached to an exterior of the bicycle front fork or bicycle frame.

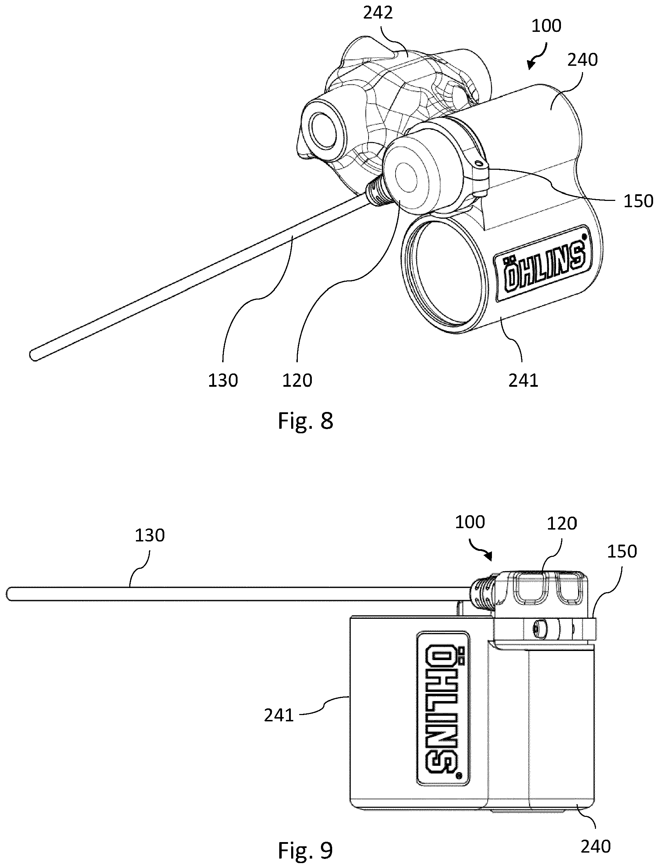

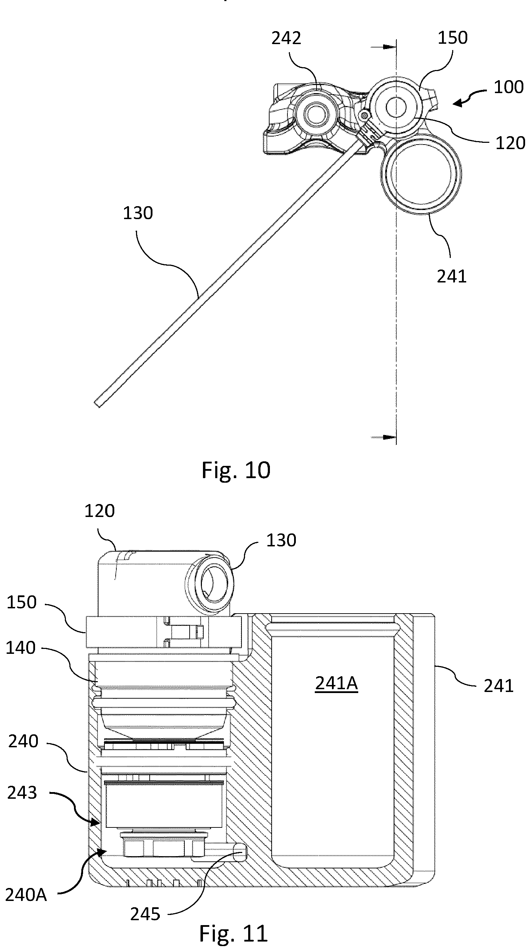

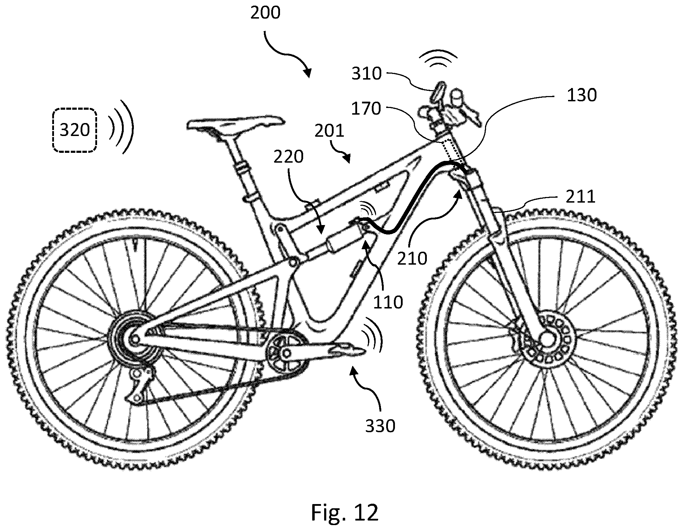

Figs. 8-11 illustrate various views of an embodiment of the control arrangement 100 wherein the SCU is adapted to be arranged in an insert space defined by a cylinder head 242 of a shock absorber. The shock absorber may be arranged in a rear position of a bicycle and form at least a part of the rear suspension. The control arrangement 100 may be adapted so that the SCU 110 is insertable in an insert space defined by a cylinder head 242 of a shock absorber or a body attached thereto. The cylinder head 242 may be provided with a reservoir chamber 241. The SCU 110 may be adapted to regulate a flow between a cylinder of the shock absorber and the reservoir 241. The control arrangement 100 may further comprise a first connection means for connecting with a front EC-valve and/or a power supply such as a battery. The SCU 110 may be adapted to be secured to the cylinder head 242 by means of securing means, which may in one embodiment include a clamping member as detailed in reference with the embodiment wherein the SCU is adapted to be arranged in an insert space of a bicycle front fork. The insert space into which the SCU is arranged may communicate with the reservoir space 241A by means of a channel 245. Fig. 12 shows a bicycle 200 adapted with a EC-suspension system and a control arrangement as herein disclosed, wherein the SCU 110 is arranged in an insert space defined by a cylinder head of the rear shock absorber. The SCU 110 may be adapted to control the rear EC-valve by means of an actuator. The SCU 110 may be adapted to control the front EC-valve by means of the first connection means, which in Fig. 12 is exemplified as including a wire 130.

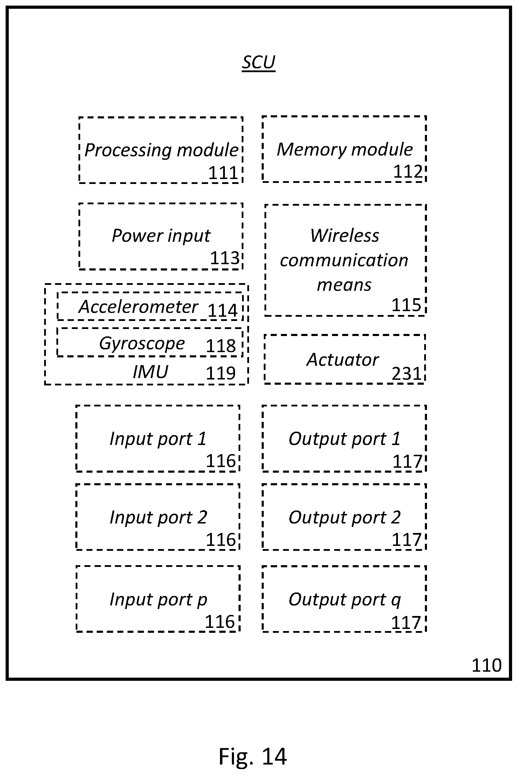

Fig. 14 shows a schematic view of one or more components of an EC-suspension system 201 with which the SCU 110 is adapted to connected to and control, at least partially or wholly. The SCU 110 may be adapted to connect with a rear EC-valve 244 of a rear suspension 220 of a bicycle. The SCU 110 may be adapted to connect with a front EC-valve 243 of a front suspension 210 of a bicycle. Depending on embodiment, the SCU 110 may be adapted to be arranged in proximity of one EC-valve of the first rear EC-valve and the front EC-valve, such as in the same insert space, to control said one EC-valve. The SCU 110 may be adapted to control the other EC-valve by means of first connection means 130. For instance, the SCU 110 may be adapted to be arranged in an insert space of a bicycle front fork to control a front EC-valve, as shown in Fig. 1. The SCU 110 may then be adapted to control a rear EC-valve by means of the first connection means 130. Alternatively, the SCU 110 may be adapted to be arranged in an insert space of a cylinder head 243 of a rear shock absorber to control a rear EC-valve, as shown in Fig. 12. The SCU 110 may then be adapted to control a front EC-valve by means of the first connection means 130.

In addition, the SCU 110 may connect with a power source 170. The power source 170 may include a battery arrangement 170. The battery arrangement 170 may be adapted to supply power to electrical components of the front suspension 210 and rear suspension 220 of the bicycle. The SCU may be adapted to connect with a human machine interface 310. The SCU may be adapted to connect with a portable computer device 320, such as a smart device (e.g., smartphone or the like). The portable computer device may serve as the HMI. The SCU 110 may be adapted to connect with one or more sensors (sensor 1, sensor 2, ... sensor m) 330. The SCU may be adapted to control front EC-valve and/or rear EC-valve based on sensor input. The SCU 110 may be adapted to connect with one or more actuators (actuator 1, actuator 2, actuator n). The SCU 110 may control the one or more actuators to adjust one aspect of the front suspension and/or rear suspension and/or an additional aspect (such as seat post height etc.). The SCU 110 may be adapted to connect with a SCU position indicator means 181 for indicating a position of the SCU relative to a fixed reference, e.g., the bicycle front fork or the bicycle frame depending on SCU insert position. However, the SCU position indicator means may be provided as a non-electric solution, such as a marking or the like on the SCU 110. The SCU 110 may be adapted to connect with a SCU position actuator 182. The SCU position actuator 182 may be adapted to actuate a change in position of the SCU 110 relative to a fixed reference, e.g., the bicycle front fork or the bicycle frame depending on SCU insert position.

The SCU 110 may comprise one or more components to enable one or more functions herein disclosed. The SCU 110 may include a processing module 111. The SCU may include a memory module 112. The SCU may include a power input 113. The SCU may include one or more accelerometers, or an IMU including one or more accelerometers. The IMU may comprise a gyroscope. The SCU 110 may include wireless communication means 115. The SCU may include one or more input ports (input port 1, input port 2, ... input port p) 116. The SCU may include one or more output ports (output port 1, output port 2, ... output port q) 117. The SCU 110 may comprise a valve actuator 231 for actuating a valve member of the front EC-valve or the rear EC-valve. The SCU 110 may comprise the front EC-valve. The SCU 110 may comprise the rear EC-valve. The control arrangement 110 may be adapted to be provided as an assembly including the SCU 110 and the actuator 231, or the SCU 110 and one of the front EC-valve and the rear EC-valve.

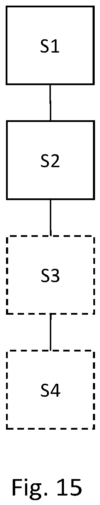

Fig. 15 shows a chart of a method for controlling operation of an EC-suspension system of a bicycle 200. The method comprises the steps of: determining S1 a parameter of the EC-suspension system 201 to be adjusted; and adjusting S2 said parameter of the EC-suspension system by means of a control arrangement 100 according to the first aspect or any embodiments thereof. The method may include one or more optional steps, such as: adjusting S3 a position of the SCU 110 relative a support member 140 to a target position; communicating S4 with at least one of one or more additional components of the EC-suspension system 201, wherein said step of adjusting S2 said parameter is at least partly based on input from said at least one of one or more additional components of the EC-suspension system 201.

While the foregoing is directed to embodiments of the disclosure, other and further embodiments may be devised without parting from the inventive concept discussed herein. The scope of the invention is however determined by the claims.

### ITEMIZED LIST OF EMBODIMENTS

1. Control arrangement (100) for controlling an electronically controlled, EC, suspension system (201) of a bicycle (200), the EC-suspension system (201) comprising front suspension (210) and rear suspension (220), the control arrangement (100) comprising:
   - a suspension control unit, SCU (110), for controlling one or more components of the EC-suspension system (201);
   - a first connection means (130),
   wherein
   the SCU (110) is adapted to be arranged in an insert position, in which insert position the SCU (110) is at least partially arranged in an insert space (211A, 211B, 240A) provided on the bicycle, in which insert position the SCU (110) is adapted to control:
   - a front EC-valve (243) of the EC-suspension system (201) for controlling the front suspension (210), and
   - a rear EC-valve (244) of the EC-suspension system (201) for controlling the rear suspension (220), wherein the SCU (110) is adapted to control one of the front EC-valve (243) and the rear EC-valve (244) via the first connection means (130).
2. Control arrangement (100) according to embodiment 1, wherein the SCU (110) is adapted to be at least partially arranged in an insert space (211A, 211B) of the front fork (211), and the SCU (110) is adapted to control the rear EC-valve (244) via the first connection means (130).
3. Control arrangement (100) according to embodiment 1, wherein the SCU (110) is adapted to be at least partially arranged in an insert space (240A) of a cylinder head (243) of a rear shock absorber, and the SCU (110) is adapted to control the front EC-valve (243) via the first connection means (130).
4. Control arrangement (100) for controlling an electronically controlled, EC, suspension system (201) of a bicycle (200), the EC-suspension system (201) comprising front suspension (210) and rear suspension (220), the control arrangement (100) comprising:
   - a suspension control unit, SCU (110), for controlling one or more components of the EC-suspension system (201);
   - a first connection means (130),
   wherein
   the SCU (110) is adapted to be arranged in an insert position in a front fork (211) of the bicycle (200), in which insert position the SCU (110) is at least partially arranged in an insert space (211A, 211B) of the front fork (211), in which insert position the SCU (110) is adapted to control:
   - a front EC-valve (243) of the EC-suspension system (201) for controlling the front suspension (210), and
   - a rear EC-valve (244) of the EC-suspension system (201) for controlling the rear suspension (220), wherein the SCU (110) is adapted to control the rear EC-valve (244) via the first connection means (130).
5. Control arrangement (100) according to any of embodiments 1-4, further comprising:
   - a support member (140) for attaching the SCU (110) to the bicycle (200),
   wherein the control arrangement (100) is further adapted to enable the SCU (110), when the SCU (110) is in the insert position, to rotate relative the support member (140) to a target position.
6. Control arrangement (100) according to embodiment 5, further comprising:
   - position indicator means (181) to indicate a current position of the SCU (110) relative the front fork (211).
7. Control arrangement (100) according to any of embodiments 5-6, wherein the SCU (110) comprises:
   - an accelerometer (114) or an Inertial Measurement Unit, IMU (119), including an accelerometer (114),
   wherein the target position of the SCU (110) is based on a target orientation of the accelerometer (114).
8. Control arrangement (100) according to any of embodiments 5-7, further comprising:
   - securing means (150) for locking the SCU (110) in a position relative the support member (140).
9. Control arrangement (100) according to embodiment 8, wherein said securing means (150) includes a clamping member.
10. Control arrangement (100) according to any of embodiment 5-9, further comprising:
   - a SCU positioning actuator (181) adapted to control the position of the SCU (110) relative the support member (140) in response to a control signal,
   wherein the SCU (110) is adapted to generate said control signal.
11. Control arrangement (100) according to any preceding embodiments, wherein the SCU (110) is adapted to be inserted in an insert space (211A, 211B) located in a first fork leg (2111) of the front fork (211) or a steering tube (2112) of the front fork (211).
12.Control arrangement (100) according to any preceding embodiments, the SCU (110) is adapted to connect with at least one additional component of the EC-suspension system (201), which said at least one additional component includes one or more of:
   i) a power source (170);
   ii) one or more sensors (330);
   iii) one or more actuators (231);
   iv) a Human Machine Interface, HMI, (310);
   v) a portable computer device (320).
13. Control arrangement (100) according to embodiment 12, wherein the first connection means (130) is adapted to connect with the rear EC-valve (244) and at least one of the at least one additional component (170, 330, 231, 310, 320) of the EC-suspension system (201).
14.Control arrangement (100) according to any of embodiments 9-10,
   further comprising:
   - wireless communication means (115) for establishing wireless communication between the SCU (110) and at least one of said at least one additional component (170, 330, 231, 310, 320) of the EC-suspension system (201).
15.Control arrangement (100) according to any preceding embodiments, wherein the first connection means (130) includes a wired connection.
16. Control arrangement (100) according to any preceding embodiments, further comprising: a power source (170), such as a battery, for providing power to the SCU (110) and optionally to one or more components (170, 330, 231, 310, 320) of the EC-suspension system (201).
17.Control arrangement (100) according to embodiment 13, wherein the power source (170) is adapted to provide power to the EC-suspension system (201).
18.Control arrangement (100) according to any of embodiments 16-17, wherein said power source (170) is a battery (170) and is adapted to be inserted in one of:
   i) said insert space (211A, 211B) of the front fork (211);
   ii) a second insert space (211A, 211B) of the front fork (211);
   iii) a third insert space in a bicycle frame of the bicycle (200).
19. Control arrangement (100) according to embodiment 18, further comprising:
   - a second connection means (160) provided on the SCU (110),
   wherein the battery (130) is rechargeable via said second connection means (160).
20.Control arrangement (100) according embodiment 19, wherein the SCU (110) is adapted to receive and/or output data via the second connection means (160).
21.Control arrangement (100) according to any of embodiments 16-17, wherein the SCU (110) is adapted to, when in the insert position, to close the insert space (211A, 211B) of the front fork (211), wherein a housing of the SCU (110) is adapted at least partially with a wireless communication permissible material to allow the SCU (110) to communicate wirelessly with one or more components (170, 330, 231, 244, 310, 320) of the EC-suspension system (201) outside the insert space (211A, 211B) into which the SCU (110) is adapted to be arranged.
22.Control arrangement (100) according to any preceding embodiments, further comprising:
   - user interactive means, such as a button, for controlling at least one operation of the SCU (110).
23. Control arrangement (100) according to any preceding embodiments, further comprising:
   - status indicating means, such as a LED-device, for indicating a status of the SCU (110) and/or the EC-suspension system (201).
24. Control arrangement (100) according to any preceding embodiments, further comprising an actuator for adjusting a valve member of the front EC-valve (243) or the rear EC-valve (244).
25. Control arrangement (100) according to any preceding embodiments, further comprising the front EC-valve (243) or the rear EC-valve (244).
26.An electronically controlled, EC, suspension system (201) for a bicycle (200), the EC-suspension system (201) comprising:
   - a front suspension (210);
   - a front EC-valve (243) adapted to control the front suspension (210) of the bicycle (200);
   - a rear suspension (220);
   - a rear EC-valve (244) adapted to control the rear suspension (220) of the bicycle (200);
   - a control arrangement (100) according to any preceding embodiments.
27.A bicycle (200) comprising:
   - an EC-suspension system (201) including: a front suspension (210), a front EC-valve (243) adapted to control the front suspension (210), a rear suspension (220), a rear EC-valve (244) adapted to control the rear suspension (220);
   - one or more insert spaces (211A, 211B) in a front fork (211) of the bicycle (200), and optionally one or more insert spaces in a bicycle frame of the bicycle (200), and
   - a control arrangement (100) according to any of embodiments 1-25.
28. Method for controlling operation of an EC-suspension system of a bicycle (200), the method comprising the steps of:
   i. determining (S1) a parameter of the EC-suspension system (201) to be adjusted;
   ii. adjusting (S2) said parameter of the EC-suspension system by means of a control arrangement (100) according to embodiments 1-25;
   iii. optionally, adjusting (S3) a position of the SCU (110) relative a support member (140) to a target position;
   iv. optionally, communicating (S4) with at least one of one or more additional components of the EC-suspension system (201), wherein said step of adjusting (S2) said parameter is at least partly based on input from said at least one of one or more additional components of the EC-suspension system (201).
29.Computer program comprising instructions which, when the program is executed by a computer, cause the computer to carry out the method according to embodiment 26.
30.Computer-readable storage medium comprising instructions which, when executed by a computer, cause the computer to carry out the method according to embodiment 26.

## Claims

1. Control arrangement (100) for controlling an electronically controlled, EC, suspension system (201) of a bicycle (200), the EC-suspension system (201) comprising front suspension (210) and rear suspension (220), the control arrangement (100) comprising:
- a suspension control unit, SCU (110), for controlling one or more components of the EC-suspension system (201);
- a first connection means (130),
wherein
the SCU (110) is adapted to be arranged in an insert position in a front fork (211) of the bicycle (200), in which insert position the SCU (110) is at least partially arranged in an insert space (211A, 211B) of the front fork (211), in which insert position the SCU (110) is adapted to control:
- a front EC-valve (243) of the EC-suspension system (201) for controlling the front suspension (210), and
- a rear EC-valve (244) of the EC-suspension system (201) for controlling the rear suspension (220), wherein the SCU (110) is adapted to control the rear EC-valve (244) via the first connection means (130).

2. Control arrangement (100) according to claim 1, further comprising:
- a support member (140) for attaching the SCU (110) to the bicycle (200),
wherein the control arrangement (100) is further adapted to enable the SCU (110), when the SCU (110) is in the insert position, to rotate relative the support member (140) to a target position.

3. Control arrangement (100) according to claim 2, further comprising:
- position indicator means (181) to indicate a current position of the SCU (110) relative the front fork (211).

4. Control arrangement (100) according to any of claims 2-3, wherein the SCU (110) comprises:
- an accelerometer (114) or an Inertial Measurement Unit, IMU (119), including an accelerometer (114),
wherein the target position of the SCU (110) is based on a target orientation of the accelerometer (114).

5. Control arrangement (100) according to any of claims 2-4, further comprising:
- securing means (150) for locking the SCU (110) in a position relative the support member (140), wherein optionally said securing means (150) includes a clamping member.

6. Control arrangement (100) according to any preceding claims, wherein the SCU (110) is adapted to be inserted in an insert space (211A, 211B) located in a first fork leg (2111) of the front fork (211) or a steering tube (2112) of the front fork (211).

7. Control arrangement (100) according to any preceding claims, wherein in the insert position, the SCU (110) is adapted to connect with at least one additional component of the EC-suspension system (201), which said at least one additional component includes one or more of:
i) a power source (170);
ii) one or more sensors (330);
iii) one or more actuators (231);
iv) a Human Machine Interface, HMI, (310);
v) a portable computer device (320).

8. Control arrangement (100) according to claims 7, wherein the first connection means (130) is adapted to connect with the rear EC-valve (244) and at least one of the at least one additional component (170, 330, 231, 310, 320) of the EC-suspension system (201).

9. Control arrangement (100) according to claim 8, further comprising:
- wireless communication means (115) for establishing wireless communication between the SCU (110) and at least one of said at least one additional component (170, 330, 231, 310, 320) of the EC-suspension system (201).

10. Control arrangement (100) according to any preceding claims, wherein the first connection means (130) includes a wired connection.

11. Control arrangement (100) according to any preceding claims, further comprising a power source (170), such as a battery, for providing power to the SCU (110) and optionally to one or more components (170, 330, 231, 310, 320) of the EC-suspension system (201),
wherein, optionally, the power source (170) is adapted to provide power to the EC-suspension system (201),
wherein, optionally, said power source (170) is a battery (170) and is adapted to be inserted in one of:
i) said insert space (211A, 211B) of the front fork (211);
ii) a second insert space (211A, 211B) of the front fork (211);
iii) a third insert space in a bicycle frame of the bicycle (200).

12. Control arrangement (100) according to claim 11, further comprising:
- a second connection means (160) provided on the SCU (110),
wherein the battery (130) is rechargeable via said second connection means (160), wherein optionally the SCU (110) is adapted to receive and/or output data via the second connection means (160).

13. Control arrangement (100) according to any preceding claims, further comprising an actuator (231) for adjusting a valve member of the front EC-valve (243).

14. A bicycle (200) comprising:
- an EC-suspension system (210) including: a front suspension (210), a front EC-valve (243) adapted to control the front suspension (210), a rear suspension (220), a rear EC-valve (244) adapted to control the rear suspension (220);
- one or more insert spaces (211A, 211B) in a front fork (211) of the bicycle (200), and optionally one or more insert spaces in a bicycle frame of the bicycle (200), and
- a control arrangement (100) according to any of claims 1-13.

15. Method for controlling operation of an EC-suspension system (201) of a bicycle (200), the method comprising the steps of:
i. determining (S1) a parameter of the EC-suspension system (201) to be adjusted;
ii. adjusting (S2) said parameter of the EC-suspension system by means of a control arrangement (100) according to claim 1-13;
iii. optionally, adjusting (S3) a position of the SCU (110) relative a support member (140) to a target position;
iv. optionally, communicating (S4) with at least one of one or more additional components of the EC-suspension system (201), wherein said step of adjusting (S2) said parameter is at least partly based on input from said at least one of one or more additional components of the EC-suspension system (201).
